# FASCICULE DE BREVET EUROPEEN

(11) **EP 2 782 839 B1**
(45) Date de publication et mention de la délivrance du brevet: **26.07.2017**
(21) Numéro de dépôt: 12788535.8
(22) Date de dépôt: 21.11.2012
(51) Int. Cl.: B65D 33/25

(54) **DISPOSITIF DE FERMETURE POUR SACHETS À EFFET TACTILE ET SONORE, SACHET COMPRENANT UN TEL DISPOSITIF ET PROCÉDÉ DE RÉALISATION D'UN TEL DISPOSITIF**
VERSCHLUSSVORRICHTUNG FÜR BEUTEL MIT BERÜHRUNGS- UND KLANGEFFEKT, BEUTEL MIT EINER SOLCHEN VORRICHTUNG UND VERFAHREN ZUR HERSTELLUNG EINER SOLCHEN VORRICHTUNG
CLOSURE DEVICE FOR BAGS HAVING A TACTILE AND SOUND EFFECT, BAG COMPRISING SUCH A DEVICE AND METHOD FOR PRODUCING SUCH A DEVICE

(30) Priorité: 21.11.2011 FR 1160605
(43) Date de publication de la demande: 01.10.2014
(73) Titulaire: S2F Flexico, 60119 Henonville (FR)
(72) Inventeur: BOIS, Henri, F-92200 Neuilly-sur-Seine (FR); MOULIN, Isabelle, F-75008 Paris (FR)
(74) Mandataire: Regimbeau
(86) Numéro de dépôt international: PCT/EP2012/073184
(87) Numéro de publication internationale: WO 2013/076119

(56) Documents cités:
- EP-A1- 0 647 415
- US-A- 5 070 584
- US-A1- 2003 033 694

## Description

La présente invention concerne le domaine des dispositifs de fermeture pour sachets, sacs ou équivalents.

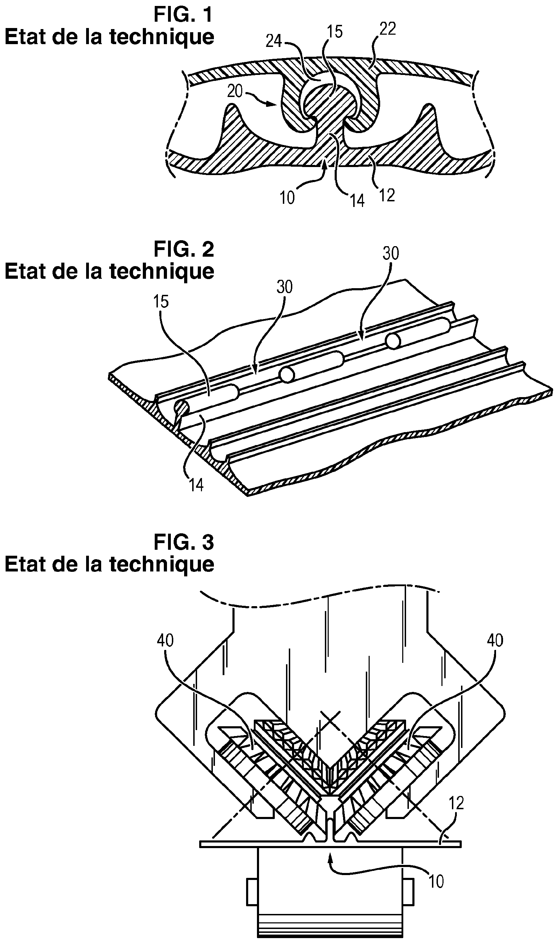

Plus précisément la présente invention concerne les dispositifs de fermeture à base de deux profilés complémentaires 10, 20 portés par des voiles ou parois support opposés respectifs 12, 22 tels qu'illustrés à titre d'exemple non limitatif sur la figure 1 annexée.

De nombreuses variantes de réalisation du dispositif illustré sur la figure 1 ont déjà été proposées et tombent dans le champ de la présente invention.

Généralement, les profilés complémentaires précités sont formés d'éléments mâle/femelle complémentaires, l'élément mâle comprenant une tige 14 solidaire du voile ou de la paroi 12 et munie d'une protubérance élargie 15 à son sommet, tandis que l'élément femelle 20 est formé d'une gorge 24 à bords convergents présentant en section une cavité complémentaire de la protubérance 15.

Le but général de la présente invention est de proposer des perfectionnements aux profilés ainsi connus afin de générer une sensation tactile et un effet sonore lors de la fermeture et de l'ouverture du dispositif précité, c'est-à-dire respectivement lors de l'engagement des profilés 10, 20 et de la séparation de ceux-ci.

Différentes dispositions ont déjà été proposées afin de générer de tels sensations tactiles et efforts sonores lors de la fermeture et de l'ouverture du dispositif précité.

Des exemples de telles dispositions connues sont décrits dans les documents WO 96/28063, US 5 070 584 et EP 0 446 760. Ces documents divulguent des moyens tels qu'illustrés sur les figures 2 et 3 annexées. Comme on le voit sur la figure 2, les dispositions connues consistent le plus souvent à opérer une déformation ou découpe séquentielle 30 le long de l'un des deux profilés, par exemple le profilé mâle 10 selon l'illustration de la figure 2, afin de définir ainsi une succession de points durs et de points faibles dans l'engagement respectif des éléments 10, 20.

Comme on l'a représenté sur la figure 3, les moyens connus pour réaliser de tels dispositifs de fermeture conformes à l'art antérieur, procèdent généralement par écrasement ou découpe latérale avec enlèvement de matière de l'un des profilés, par exemple le profilé mâle 10, à l'aide de mollettes crantées 40 entraînées à rotation autour d'un axe général transversal aux voiles ou parois support 12 du profilé considéré, c'est-à-dire selon une direction de déformation ou de modification d'épaisseur parallèle aux voiles ou parois support 12.

Le document US 2003/033694 quant à lui propose de déformer transversalement par compression les profilés complémentaires, afin de créer des déflexions locales permettant de générer des effets sonores lors de l'actionnement du dispositif. Néanmoins, des alternatives sont recherchées aujourd'hui afin d'accentuer ces effets sonores lors de la mise en prise et la séparation des profilés complémentaires, sans pour autant complexifier leur procédé de fabrication.

Dans ce contexte, le but particulier de la présente invention est d'améliorer les dispositions connues de l'art antérieur, afin de renforcer la sensation tactile et l'effet sonore.

Ce but est atteint dans le cadre de la présente invention, grâce à un dispositif de fermeture pour sachets ou équivalents comprenant deux profilés complémentaires portés par des voiles support respectifs, le dispositif de fermeture présentant des écrasements séquentiels, des deux profilés en prise, selon une direction perpendiculaire aux voiles support, de sorte que les écrasements séquentiels réalisent un évasement des deux profilés complémentaires dans le sens de la largeur transversale à la direction d'élongation du dispositif de fermeture.

La présente invention concerne également les sachets ou sacs équipés d'un tel dispositif de fermeture.

La présente invention concerne également un procédé de réalisation de tels dispositifs de fermeture ou sachets comprenant une étape d'écrasement séquentiel de deux profilés complémentaires selon une direction perpendiculaire aux voiles ou parois support des profilés complémentaires.

D'autres caractéristiques, buts et avantages de la présente invention apparaîtront à la lecture de la description détaillée qui va suivre, et au regard des dessins annexés donnés à titre d'exemples non limitatifs et sur lesquels :
- les figures 1, 2 et 3 précédemment décrites représentent respectivement une vue en coupe transversale d'un dispositif de fermeture conforme à l'état de la technique susceptible d'être utilisé dans le cadre de la présente invention, une vue en perspective partielle d'un dispositif de fermeture présentant des découpes séquentielles conformes à l'état de la technique et un outil conforme à l'état de la technique comportant deux mollettes d'écrasement latérales d'un profilé de fermeture mobiles selon un axe de rotation globalement transversal aux voiles support dudit profilé,
- la figure 4 représente une vue schématique en perspective partielle d'un dispositif de fermeture avant écrasement conforme à la présente invention,
- la figure 5 représente le même dispositif de fermeture en perspective partielle après écrasement séquentiel conforme à la présente invention,
- les figures 6 et 7 représentent respectivement des vues individuelles d'un profilé mâle et d'un profilé femelle formant en combinaison un dispositif de fermeture conforme à la présente invention illustré sur la figure 5,
- la figure 8 représente une vue en coupe transversale d'un dispositif de fermeture en cours d'écrasement conforme à la présente invention et de l'outil utilisé à cet effet,
- la figure 9 représente une variante d'une vue en coupe transversale d'un dispositif de fermeture en cours d'écrasement conforme à la présente invention et de la variante d'outil utilisé à cet effet,
- la figure 10 représente une vue en perspective d'un sachet conforme à la présente invention comprenant des écrasements séquentiels réalisés selon les modalités de l'invention
- les figures 11, 12 et 13 représentent respectivement, pour une première variante de réalisation d'un dispositif de fermeture comprenant deux paires de profilés de fermeture complémentaires parallèles, une vue en perspective partielle du dispositif de fermeture après écrasement séquentiel d'une paire de profilés et des vues individuelles de profilés mâles et de profilés femelles formant en combinaison un dispositif de fermeture illustré sur la figure 11,
- les figures 14, 15 et 16 représentent respectivement, pour une deuxième variante de réalisation d'un dispositif de fermeture conforme à la présente invention comprenant deux paires de profilés de fermeture complémentaires parallèles, une vue en perspective partielle du dispositif de fermeture après écrasement séquentiel des deux paires de profilés et des vues individuelles de profilés mâles et de profilés femelles formant en combinaison un dispositif de fermeture conforme à la présente invention illustré sur la figure 14,

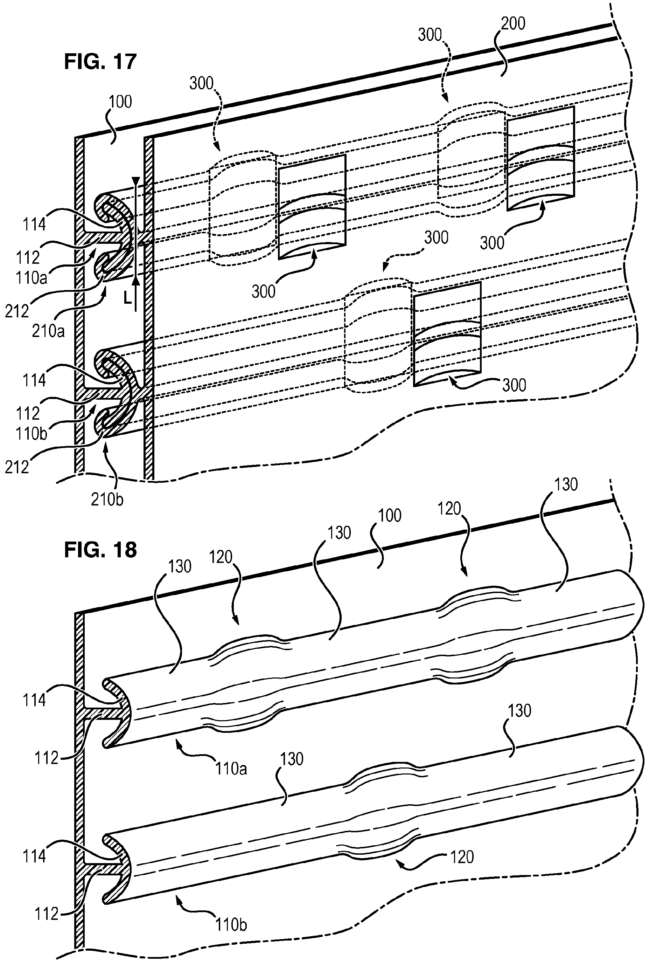

- les figures 17, 18 et 19 représentent respectivement, pour une troisième variante de réalisation d'un dispositif de fermeture conforme à la présente invention comprenant deux paires de profilés de fermeture complémentaires parallèles, une vue en perspective partielle du dispositif de fermeture après écrasement séquentiel des deux paires de profilés avec décalage longitudinal entre les écrasements réalisés sur les deux paires de profilés et des vues individuelles de profilés mâles et de profilés femelles formant en combinaison un dispositif de fermeture conforme à la présente invention illustré sur la figure 17, et
- les figures 20, 21 et 22 représentent respectivement, pour une quatrième variante de réalisation d'un dispositif de fermeture conforme à la présente invention comprenant deux paires de profilés de fermeture complémentaires parallèles l'un de type mâle/femelle complémentaires et l'autre de type crochets complémentaires, une vue en perspective partielle du dispositif de fermeture après écrasement séquentiel et des vues individuelles des profilés portés par des films support opposés et formant en combinaison un dispositif de fermeture conforme à la présente invention illustré sur la figure 20.

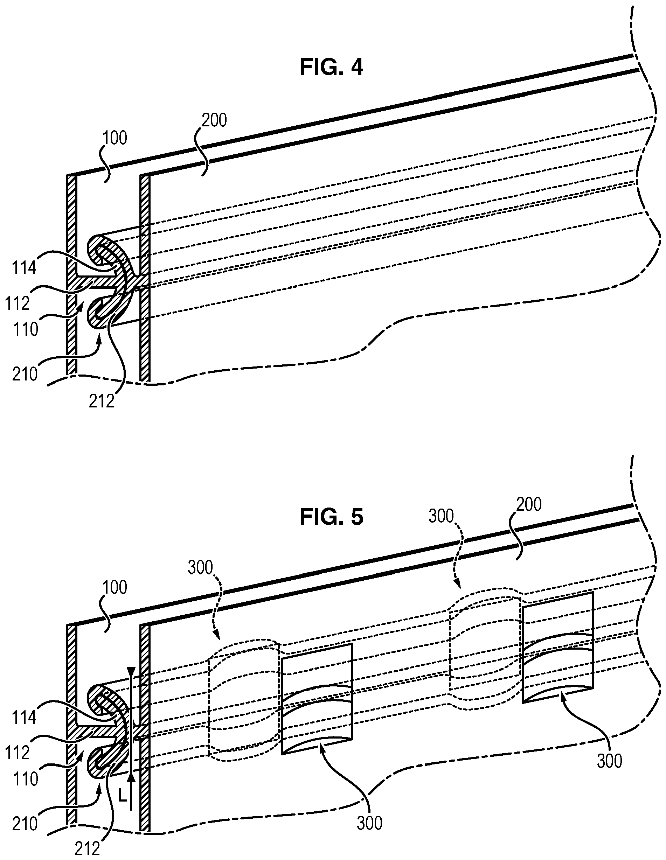

On a représenté sur la figure 4 annexée, un dispositif de fermeture comprenant deux voiles support 100, 200 portant respectivement deux profilés complémentaires 110, 210.

Selon le mode de réalisation particulier représenté sur la figure 4, le premier profilé 110 comprend une tige 112 globalement perpendiculaire au voile support 100 et munie à son sommet opposé au voile support 100, d'une protubérance évasée 114. Le profilé femelle 210 complémentaire quant à lui, comprend essentiellement une gorge à bords convergents 212 définissant dans sa section une cavité complémentaire de la protubérance évasée 114.

Les profilés de fermeture complémentaires 110 et 210 présentent une section constante sur leur longueur. Ils sont de préférence réalisés par extrusion. Un tel dispositif de fermeture ne sera pas décrit plus en détail dans sa structure initiale, dans la mesure où de tels dispositifs de fermeture sont bien connus de l'homme de l'art, et peuvent donner lieu à de nombreux modes de réalisation ou variantes. On citera par exemple une variante de réalisation dans laquelle, le dispositif de fermeture comporte deux profilés complémentaires 110, 210, non pas sous forme d'un élément mâle ou d'un élément femelle complémentaire, mais sous forme de simples crochets complémentaires.

Par ailleurs, dans le cadre de la présente invention, on peut envisager, soit un dispositif de fermeture comprenant les deux profilés de fermeture 110, 210 réalisés séparément d'un sachet, puis rapportés et fixés, par exemple par soudure thermique sur des films composant un sachet ou encore un dispositif de fermeture venu directement de matière, par exemple d'extrusion, avec des films formant les parois du sachet.

Comme on l'a indiqué précédemment, dans le cadre de la présente invention, les profilés complémentaires 110, 210 sont écrasés séquentiellement dans leur position assemblée tel qu'illustré sur la figure 4 selon un écrasement dans une direction perpendiculaire aux voiles et parois support 100, 200. On comprendra ici que, par opposition aux déflexions notamment proposées par le document US 2003/0033694, les écrasements séquentiels selon l'invention réalisent un évasement des deux profilés complémentaires dans le sens de la largeur transversale à la direction d'élongation du dispositif de fermeture, et ne correspondent pas simplement à une distorsion locale des profilés dans la direction transversale.

La figure 5 illustre les zones d'écrasement ainsi obtenues au niveau de zone référencée 300. De préférence, les zones d'écrasement 300 couvrent toute la largeur L des profilés considérés perpendiculairement à leur direction d'élongation.

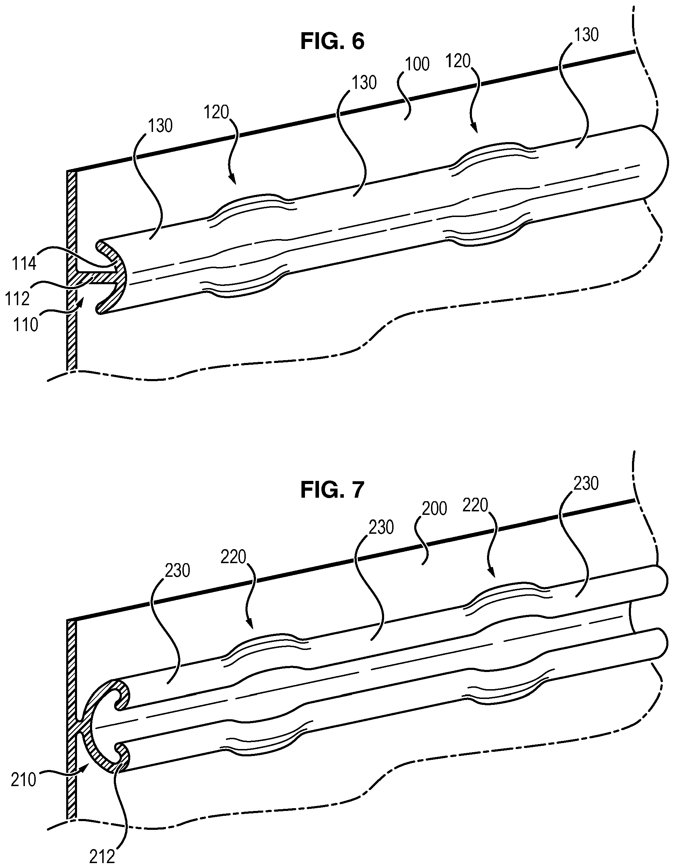

On a illustré sur les figures 6 et 7 respectivement un profilé mâle 110 et un profilé femelle 210 ainsi écrasés séquentiellement conformément à la présente invention. On observe sur les figures 6 et 7 des évasements séquentiels 120, 220 selon la largeur transversale à la direction d'élongation, tant du profilé mâle 110 que du profilé femelle 210. Cependant, l'écrasement séquentiel étant réalisé selon la présente invention en position assemblée des deux profilés 110, 210, on garantit que les sections transversales, tant du profilé mâle 110 que du profilé femelle 210, bien que déformés en élargissement, restent parfaitement appairés, complémentaires dans une certaine mesure, et compatibles à la fois pour une fermeture, c'est-à-dire une mise en prise, et une ouverture, c'est-à-dire une séparation.

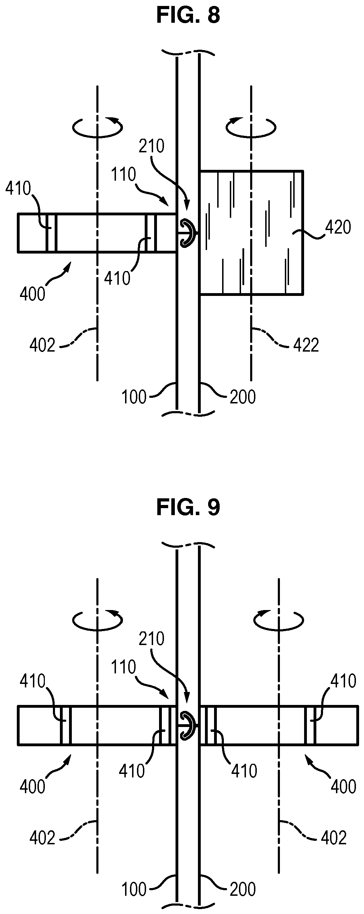

Comme on l'a représenté sur la figure 8, les écrasements séquentiels peuvent être réalisés dans le cadre de la présente invention, à l'aide d'une mollette 400 crantée avec des protubérances périphériques 410 au pas souhaité des écrasements séquentiels 300, sollicitant un côté du dispositif de fermeture et un simple rouleau d'appui 420 situé sur le côté opposé.

La mollette 400 et le rouleau d'appui 420 illustrés sur la figure 8, sont entraînés à rotation selon des axes 402, 422 parallèles entre eux et parallèles aux voiles support 100, 200.

On a illustré sur la figure 9 annexée, une variante de réalisation selon laquelle, l'écrasement séquentiel conforme à la présente invention est réalisé à l'aide de deux rouleaux ou molettes crantés 400 disposés respectivement de part et d'autre du dispositif de fermeture, les rouleaux crantés 400 comprenant des protubérances 410 au pas des écrasements 300 souhaités et étant, là encore, entraînés à rotation autour d'axes 402 parallèles entre eux et parallèles aux voiles support 100, 200. Les deux molettes 400 sont synchronisées de sorte que leurs protubérances respectives sollicitent simultanément les profilés 110, 210 en écrasement.

Les dispositifs de fermeture conformes à la présente invention peuvent être réalisés à base de tout matériau approprié, de préférence à base de polyoléfine.

L'homme de l'art comprendra que la réalisation des écrasements des deux profilés complémentaires 110, 210 en position assemblée de ceux-ci, permet de renforcer la sensation tactile et l'effet sonore de cliquetis obtenus notamment lors de l'ouverture du dispositif, mais également lors de sa fermeture, en raison de la succession de points durs et de points faibles dans l'engagement et la séparation ainsi défini dans la direction longitudinale de la fermeture.

La présente invention permet en effet d'obtenir une déformation importante séquentielle des deux profilés complémentaires 110, 210, tout en garantissant leur possibilité d'engagement et de séparation, dans la mesure où les écrasements 300 réalisés sont parfaitement complémentaires, puisque ceux-ci sont réalisés en position fermée des deux profilés.

On notera que la présence de tronçons 130, 230 de section constante et donc l'engagement aisé de ces tronçons entre deux écrasements 300 permet par simple coulissement entre les doigts d'un utilisateur de prolonger l'engagement obtenu au niveau de tels tronçons 130, 230 de section constante vers les zones d'écrasement 300 déformées.

Le renforcement de la sensation tactile et de l'effet sonore obtenu grâce à la présente invention résulte ainsi de l'élargissement commun réalisé sur les deux profilés.

A titre d'exemple non limitatif, le pas des écrasements séquentiels réalisés est compris entre 4mm et 1cm.

Par ailleurs dans le cadre de la présente invention, l'écrasement est de préférence réalisé de sorte que l'on obtienne un élargissement dans le sens de la largeur L des profilés, au moins égal à 5% de la largeur L d'origine, de préférence supérieure à 10% de cette largeur L.

Les mollettes d'écrasement 400 et le cas échéant le rouleau d'appui 420 peuvent être chauffés afin de renforcer la déformation par écrasement des profilés de fermeture et garantir le maintien en position écrasée séquentielle de ceux-ci.

Cependant, si le matériau le permet, les écrasements peuvent être réalisés à l'aide de simples mollettes 400 à température ambiante.

Selon encore une autre variante, les écrasements séquentiels peuvent être réalisés avec des mollettes à température ambiante, mais opérant sur une fermeture « ramollie », c'est-à-dire déformés par une extrusion à chaud en sortie de celle-ci.

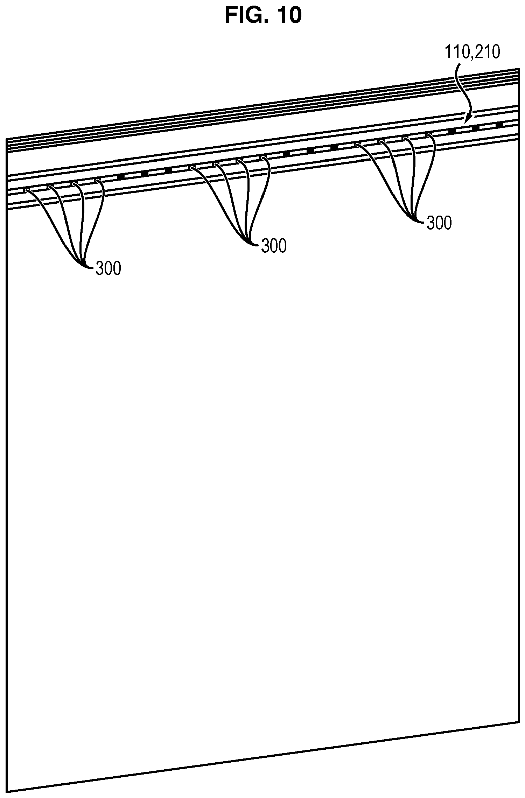

La figure 10 illustre un sachet conforme à la présente invention. On voit sur la figure 10 une série d'écrasement répartis sur la longueur du dispositif de fermeture.

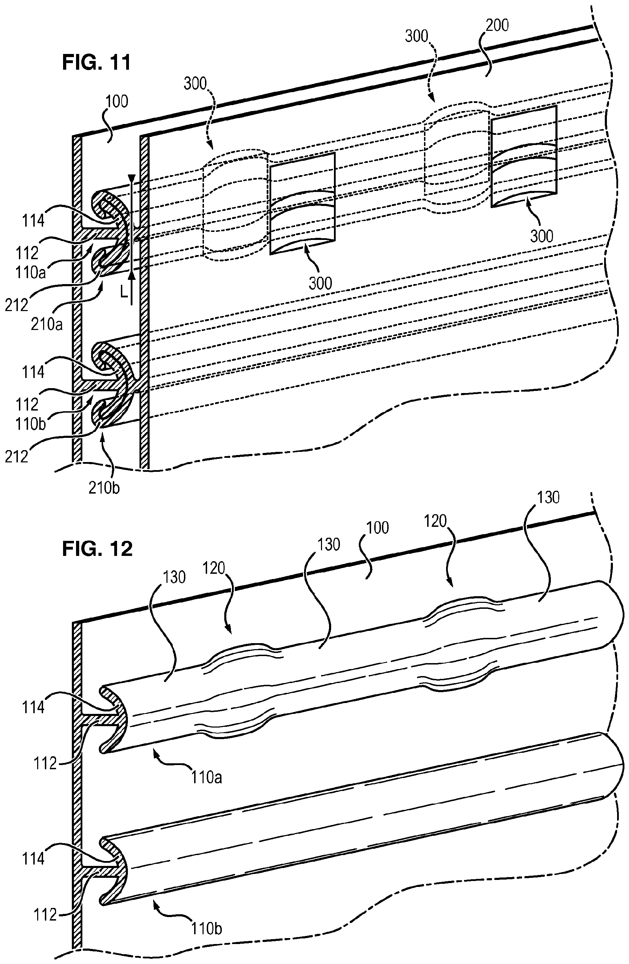

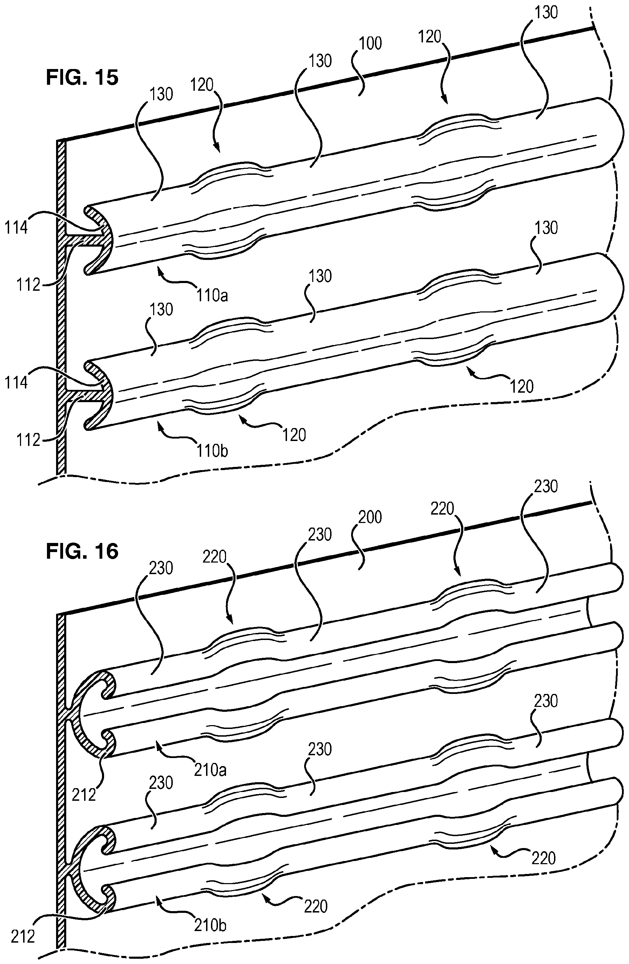

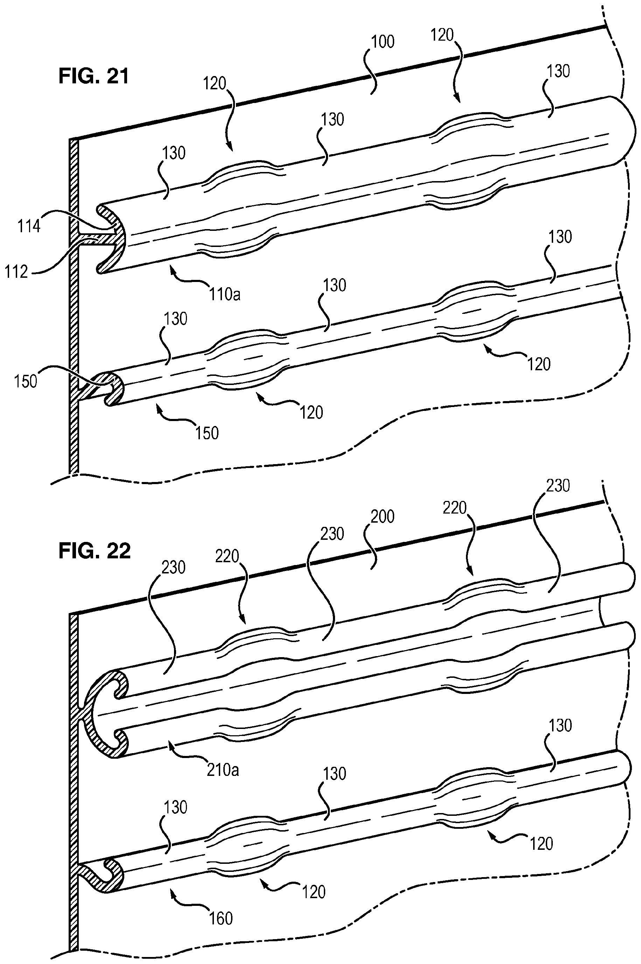

Comme on l'a illustré sur les figures 11 à 22, selon des variantes de réalisation, le dispositif de fermeture peut comprendre au moins deux paires de profilés complémentaires parallèles. Cette disposition permet de renforcer notamment l'étanchéité des sachets une fois fermée et de limiter les risques d'ouverture intempestive sous l'effet de la pression interne des sachets.

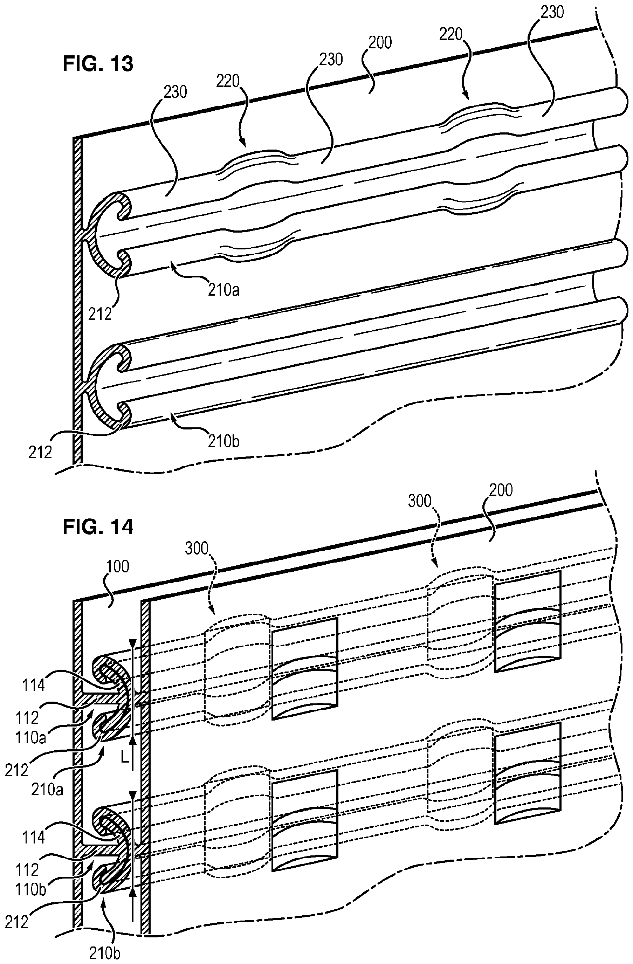

Dans ce cas l'on peut prévoir que les deux paires de profilés parallèles sont simultanément écrasés séquentiellement avec le même pas et en synchronisme comme illustré sur les figures 14 à 16, ou avec un décalage longitudinal comme illustré sur les figures 17 à 19 (ou encore avec des pas différents ou sous multiples d'une paire de profilés à l'autre et ce avec ou sans décalage longitudinal) ou que seulement une paire de profilés est écrasée comme illustrée sur les figures 11 à 13.

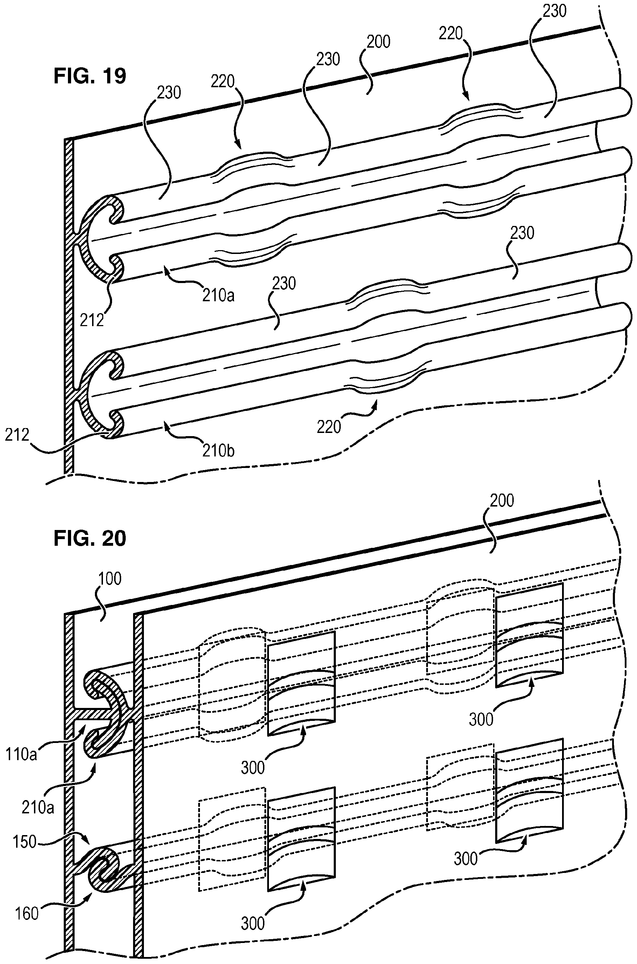

Comme on l'a illustré sur les figures 20 à 22 le cas échéant l'une au moins des paires de profilés peut être formée de profilés complémentaires en crochet 150, 160.

On a illustré sur les figures 11, 12 et 13 une première variante de réalisation d'un dispositif de fermeture comprenant deux paires de profilés de fermeture complémentaires parallèles 110a/210a et 110b/210b. Plus précisément les figures 11, 12 et 13 représentent respectivement une vue en perspective partielle du dispositif de fermeture après écrasement séquentiel d'une paire de profilés 110a/210a (la seconde paire de profilés 110b/210b n'est pas écrasée) et des vues individuelles de profilés mâles 110a et 110b et de profilés femelles 210a et 210b formant en combinaison un dispositif de fermeture conforme à la présente invention illustré sur la figure 11.

On a illustré sur les figures 14, 15 et 16 une deuxième variante de réalisation d'un dispositif de fermeture conforme à la présente invention comprenant deux paires de profilés de fermeture complémentaires parallèles 110a/210a et 110b/210b. Plus précisément les figures 14, 15 et 16 représentent respectivement une vue en perspective partielle du dispositif de fermeture après écrasement séquentiel des deux paires de profilés 110a/210a et 110b/210b et des vues individuelles de profilés mâles 110a et 110b et de profilés femelles 210a/210b formant en combinaison un dispositif de fermeture conforme à la présente invention illustré sur la figure 14.

On a illustré sur les figures 17, 18 et 19 une troisième variante de réalisation d'un dispositif de fermeture conforme à la présente invention comprenant deux paires de profilés de fermeture complémentaires parallèles 110a/210a et 110b/210b. Plus précisément les figures 17, 18 et 19 représentent respectivement une vue en perspective partielle du dispositif de fermeture après écrasement séquentiel des deux paires de profilés 110a/210a et 110b/210b avec décalage longitudinal entre les écrasements réalisés sur les deux paires de profilés et des vues individuelles de profilés mâles 110a et 110b et de profilés femelles 210a et 210b formant en combinaison un dispositif de fermeture conforme à la présente invention illustré sur la figure 17.

On a illustré sur les figures 20, 21 et 22 une quatrième variante de réalisation d'un dispositif de fermeture conforme à la présente invention comprenant deux paires de profilés de fermeture complémentaires parallèles l'un de type mâle/femelle complémentaires 110/210 et l'autre de type crochets complémentaires 150/160. Plus précisément les figures 20, 21 et 22 représentent respectivement, une vue en perspective partielle du dispositif de fermeture après écrasement séquentiel et des vues individuelles des profilés portés par des films support opposés et formant en combinaison un dispositif de fermeture conforme à la présente invention illustré sur la figure 20.

## Revendications

1. Dispositif de fermeture pour sachets ou équivalents comprenant deux profilés complémentaires (110, 210) portés par des voiles support respectifs (100, 200), le dispositif de fermeture présentant des écrasements séquentiels (300), des deux profilés (110, 210) en prise, selon une direction perpendiculaire aux voiles support (100, 200), de sorte que les écrasements séquentiels (300) réalisent un évasement des deux profilés complémentaires (110, 210) dans le sens de la largeur transversale à la direction d'élongation du dispositif de fermeture.

2. Dispositif selon la revendication 1, **caractérisé par le fait que** les profilés complémentaires (110, 210) sont de type mâle/femelle ou crochets.

3. Dispositif selon l'une des revendications 1 ou 2, **caractérisé par le fait qu'**il est réalisé en polyoléfine.

4. Dispositif selon l'une des revendications 1 à 3, **caractérisé par le fait que** le pas des écrasements séquentiels (300) est compris entre 4mm et 1cm.

5. Dispositif selon l'une des revendications 1 à 4, **caractérisé par le fait que** les écrasements séquentiels (300) produisent un élargissement en largeur des profilés complémentaires au moins égale à 5% de la largeur initiale et de préférence supérieure à 10%.

6. Dispositif selon l'une des revendications 1 à 5, **caractérisé par le fait que** le dispositif de fermeture comprend au moins deux paires de profilés complémentaires parallèles (110a, 110b et 210a, 210b ; 110a, 110b ; 150, 160) écrasés séquentiellement.

7. Dispositif selon la revendication 6, **caractérisé par le fait qu'**un pas des écrasements séquentiels des deux paires de profilés parallèles (110a, 110b et 210a, 210b ; 110a, 110b ; 150, 160) est le même.

8. Dispositif selon l'une des revendications 6 ou 7, **caractérisé par le fait qu'**un pas des écrasements séquentiels des deux paires de profilés parallèles (110a, 110b et 210a, 210b ; 110a, 110b ; 150, 160) est le même pas avec un décalage longitudinal.

9. Dispositif selon la revendication 6, **caractérisé par le fait qu'**un pas des écrasements séquentiels d'une première des paires de profilés est différent ou un sous multiple d'un pas des écrasements séquentiels de la deuxième des paires de profilés.

10. Sachet **caractérisé par le fait qu'**il comprend un dispositif de fermeture conforme à l'une des revendications 1 à 9.

11. Procédé de réalisation d'un dispositif de fermeture pour sachets ou équivalents selon l'une des revendications 1 à 9, **caractérisé par le fait qu'**il comprend une étape d'écrasement séquentiel des deux profilés (100, 200) du dispositif de fermeture selon une direction perpendiculaire aux voiles support (100, 200) de celui-ci, de sorte que les écrasements séquentiels (300) réalisent un évasement des deux profilés complémentaires (110, 210) dans le sens de la largeur transversale à la direction d'élongation du dispositif de fermeture.

12. Procédé selon la revendication 11, **caractérisé par le fait qu'**il est réalisé à l'aide de deux molettes crantées (400) disposées respectivement de part et d'autre du dispositif de fermeture et entraînées à rotation autour d'axes (402) parallèles aux voiles support de ce dispositif, ou à l'aide d'une mollette crantée (400) et respectivement d'un rouleau d'appui (420) disposés respectivement de part et d'autre du dispositif de fermeture et entraînés à rotation autour d'axes (402, 422) parallèles aux voiles support du dispositif de fermeture.

## Patentansprüche

1. Verschlussvorrichtung für Beutel oder dergleichen, umfassend zwei komplementäre Profile (110, 210), die von jeweiligen Tragstegen (100, 200) getragen werden, wobei die Verschlussvorrichtung sequentielle Quetschungen (300) der zwei eingreifenden Profile (110, 210) gemäß einer zu den Tragstegen (100, 200) senkrechten Richtung derart aufweist, dass die sequentiellen Quetschungen (300) eine Aufweitung der zwei komplementären Profile (110, 210) in Richtung der Breite, transversal zur Längungsrichtung der Verschlussvorrichtung, durchführen.

2. Vorrichtung nach Anspruch 1, **dadurch gekennzeichnet, dass** die komplementären Profile (110, 210) vom Typ männlich/weiblich oder Haken sind.

3. Vorrichtung nach einem der Ansprüche 1 oder 2, **dadurch gekennzeichnet, dass** sie aus Polyolefin hergestellt ist.

4. Vorrichtung nach einem der Ansprüche 1 bis 3, **dadurch gekennzeichnet, dass** der Abstand der sequentiellen Quetschungen (300) zwischen 4 mm und 1 cm beträgt.

5. Vorrichtung nach einem der Ansprüche 1 bis 4, **dadurch gekennzeichnet, dass** die sequentiellen Quetschungen (300) eine Erweiterung in der Breite der komplementären Profile von mindestens gleich 5 % der ursprünglichen Breite und vorzugsweise von über 10 % verursachen.

6. Vorrichtung nach einem der Ansprüche 1 bis 5, **dadurch gekennzeichnet, dass** die Verschlussvorrichtung mindestens zwei Paare paralleler komplementärer, sequentiell gequetschter Profile (110a, 110b und 210a, 210b; 110a, 110b; 150, 160) umfasst.

7. Vorrichtung nach Anspruch 6, **dadurch gekennzeichnet, dass** ein Abstand der sequentiellen Quetschungen der zwei Paare paralleler Profile (110a, 110b und 210a, 210b; 110a, 110b; 150, 160) derselbe ist.

8. Vorrichtung nach einem der Ansprüche 6 oder 7, **dadurch gekennzeichnet, dass** ein Abstand der sequentiellen Quetschungen der zwei Paare paralleler Profile (110a, 110b und 210a, 210b; 110a, 110b; 150, 160) derselbe Abstand mit einem Längsversatz ist.

9. Vorrichtung nach Anspruch 6, **dadurch gekennzeichnet, dass** ein Abstand der sequentiellen Quetschungen eines ersten der Profilpaare unterschiedlich oder eine Untereinheit eines Abstands der sequentiellen Quetschungen des zweiten Profilpaares ist.

10. Beutel, **dadurch gekennzeichnet, dass** er eine Verschlussvorrichtung nach einem der Ansprüche 1 bis 9 umfasst.

11. Verfahren zur Herstellung einer Verschlussvorrichtung für Beutel oder dergleichen, nach einem der Ansprüche 1 bis 9, **dadurch gekennzeichnet, dass** es einen Schritt des sequentiellen Quetschens der zwei Profile (100, 200) der Verschlussvorrichtung gemäß einer zu den Tragstegen (100, 200) desselben senkrechten Richtung derart umfasst, dass die sequentiellen Quetschungen (300) eine Aufweitung der zwei komplementären Profile (110, 210) in Richtung der Breite, transversal zur Längungsrichtung der Verschlussvorrichtung, durchführen.

12. Verfahren nach Anspruch 11, **dadurch gekennzeichnet, dass** es mit Hilfe von zwei gezahnten Rädchen (400) durchgeführt wird, die auf jeweils der einen und der anderen Seite der Verschlussvorrichtung angeordnet sind und um Achsen (402) rotierend angetrieben werden, die parallel zu den Tragstegen dieser Vorrichtung sind, oder mit Hilfe eines gezahnten Rädchens (400) und eines jeweiligen Stützrads (420), die jeweils auf der einen und der anderen Seite der Verschlussvorrichtung angeordnet sind und um Achsen (402, 422) rotierend angetrieben werden, die parallel zu den Tragstegen der Verschlussvorrichtung sind.

## Claims

1. A closure device for bags or the like comprising two complementary profiles (110, 210) borne by respective support webs (100, 200), the closure device having sequential crushings (300) of the two engaged profiles (110, 210) along a direction perpendicular to the support webs (100, 200), so that the sequential crushings (300) flare the two complementary profiles (110, 210) in the direction of the width transversal to the elongation direction of the closure device.

2. The device according to claim 1, **characterized by** the fact that the complementary profiles (110, 210) are of the male/female or hook type.

3. The device according to one of claims 1 or 2, **characterized by** the fact that it is made in polyolefin.

4. The device according to one of claims 1 to 3 **characterized by** the fact that the pitch of the sequential crushings (300) is comprised between 4 mm and 1 cm.

5. The device according to one of claims 1 to 4, **characterized by** the fact that the sequential crushings (300) produce widening of the complementary profiles, at least equal to 5 % of the initial width and preferably greater than 10 %.

6. The device according to one of claims 1 to 5, **characterized by** the fact that the closure device comprises at least two pairs of parallel complementary profiles (110a, 110b and 210a, 210b; 110a, 110b; 150, 160) sequentially crushed.

7. The device according to claim 6, **characterized by** the fact that a pitch of the sequential crushings of the two pairs of parallel profiles (110a, 110b and 210a, 210b; 110a, 110b; 150, 160) is the same pitch.

8. The device according to one of claims 6 or 7, **characterized by** the fact that a pitch of the sequential crushings of the two pairs of parallel profiles (110a, 110b and 210a, 210b; 110a, 110b; 150, 160) is the same pitch with a longitudinal shift.

9. The device according to claim 6, **characterized by** the fact that a pitch of the sequential crushings of a first of the pairs of profiles is different or a submultiple of a pitch of the sequential crushings of the second of the pairs of profiles.

10. A bag **characterized by** the fact that it comprises a closure device according to one of claims 1 to 9.

11. A method for making a closure device for bags or the like according to one of claims 1 to 9, **characterized by** the fact that it comprises a step for sequentially crushing the two profiles (100, 200) of the closure device along a direction perpendicular to the support webs (100, 200) of the latter, so that the sequential crushings (300) flare the two complementary profiles (110, 210) in the direction of the width transversal to the elongation direction of the closure device.

12. The method according to claim 11, **characterized by** the fact that it is performed by means of two notched knurls (400) respectively positioned on either side of the closure device and driven into rotation about axes (402) parallel to the support webs of this device, or by means of one notched knurl (400) and respectively of a support roller (420) respectively positioned on either side of the closure device and driven into rotation about axes (402, 422) parallel to the support webs of the closure device.
